# EUROPEAN PATENT SPECIFICATION

(11) **EP 1 903 385 B1**
(45) Date of publication and mention of the grant of the patent: **05.03.2014**
(21) Application number: 07017658.1
(22) Date of filing: 10.09.2007
(51) Int. Cl.: G02F 1/1362, G02F 1/1343, G02F 1/1333

(54) **Liquid crystal display**
Flüssigkristallanzeige
Affichage à cristaux liquides

(30) Priority: 19.09.2006 KR 20060090587
(43) Date of publication of application: 26.03.2008
(73) Proprietor: Samsung Display Co., Ltd., Yongin-City, Gyeonggi-Do (KR)
(72) Inventor: Um, Yoon-sung, Suji-gu Yongin-si Gyeonggi-do (KR); Lyu, Jae-jin, Yongin-si Gyeonggi-do (KR); Park, Seung-beom, Yeongdeungpo-gu Seoul (KR); Yoo, Seung-hoo, Seongnam-si Gyeonggi-do (KR); Do, Hee-wook, Cheonan-si Chungcheongnam-do (KR); Moon, Hyun-cheol, Suwon-si Gyeonggi-do (KR); You, Hye-ran No. Lilac-1124, Yongin-si Gyeonggi-do (KR)
(74) Representative: Weitzel, Wolfgang

(56) References cited:
- EP-A- 1 383 105
- JP-A- 2006 133 577
- US-A1- 2006 023 137
- US-A1- 2006 027 813

## Description

### BACKGROUND OF THE INVENTION

### Field of the invention

The present invention relates to a liquid crystal display, and more particularly, to a liquid crystal display including a plurality of pixel electrodes whose transmittance ratios differ from each other.

### Discussion of the background

A liquid crystal display includes a liquid crystal display (LCD) panel having a thin film transistor substrate on which a thin film transistor is formed, a color filter substrate on which a color filter layer is formed, and a liquid crystal layer positioned between the thin film transistor substrate and the color filter substrate. Since the LCD panel is not a light emitting device, a backlight unit for irradiating light may be positioned at the rear surface of the thin film transistor substrate.

LCD panels have the advantages of being thin, compact, and having low power consumption. However, LCD panels have shortcomings in the manufacturing of large-size screens, full-color realization, contrast improvement, and viewing angle. A patterned vertically aligned (PVA) mode LCD has been developed to improve the viewing angle. The PVA mode indicates a cutting pattern in a vertically aligned (VA) mode formed in a pixel electrode and a common electrode, respectively. However, since the liquid crystal moves vertically in the PVA mode LCD, the difference of the optical phase retardation value of the light which passes through the liquid crystal molecule greatly varies according to the viewing angle when viewed from the front and side directions. As a result, gamma distortion may increase due to liquid crystal director distortion at the lateral side. In addition, the luminance of a low gray scale drastically increases at the lateral side, thereby deteriorating the visibility and contrast ratio.

In order to solve these problems, a super-PVA (SPVA) mode has been developed in which a pixel electrode is divided into a main pixel electrode to which a data voltage is directly applied to receive a signal, and a sub-pixel electrode, which is formed in a protective film and receives a signal by an electrically floated capacity.

However, since a voltage may sequentially accumulate in the sub-pixel electrode, a voltage shift may occur. As a result, flicker occurs according to variation of the gradation resulting in an afterimage in the LCD panel and deteriorating image clarity.

### SUMMARY OF THE INVENTION

This invention provides a liquid crystal display in which an afterimage by a flicker may be prevented.

Additional features of the invention will be set forth in the description which follows, and in part will be apparent from the description, or may be learned by practice of the invention.

The present invention discloses a liquid crystal display including a first insulation substrate, a plurality of gate lines formed on the first insulation substrate, a data line crossing with the plurality of gate lines to form a pixel region, a pixel electrode that is divided into a main pixel electrode and a sub-pixel electrode by a pixel electrode cutting pattern and that is provided in the pixel region, a first thin film transistor including a drain electrode connected to the main pixel electrode and overlapped with the sub-pixel electrode with a protective film interposed therebetween, and a second thin film transistor including a control end connected to a previous gate line, an input end connected to the sub-pixel electrode, and an output end connected to the main pixel electrode.

According to the invention of the present invention, a capacity of the second thin film transistor is about 1/100 - 1/5 of a capacity of the first thin film transistor.

According to the invention of the present invention, the main pixel electrode and the drain electrode contact each other via a contact hole formed in the protective film.

According to the invention of the present invention, the input end contacts the sub-pixel electrode and the output end contacts the main pixel electrode, respectively.

According to the invention of the present invention, the pixel electrode cutting pattern includes a tilt pattern inclined at an angle of 45° or 135° with respect to the gate line.

According to the invention of the present invention, the sub-pixel electrode comprises a clamp shape at a boundary according to an extension direction of the gate line, and the main pixel electrode surrounds a part of the periphery of the sub-pixel electrode.

According to the invention of the present invention, the main pixel electrode comprises a first portion positioned at one side of the sub-pixel electrode in the same shape as that of the sub-pixel electrode, a second portion and a third portion that are bent from either end of the main pixel electrode, and a fourth portion and a fifth portion that are bent from either end of the sub-pixel electrode and are arranged in parallel with the second portion and the third portion.

According to the invention of the present invention, the liquid crystal display further includes a storage electrode formed in the pixel region.

According to the invention of the present invention, the storage electrode is arranged in parallel with at least one of the gate line and the data line.

According to the invention of the present invention, he liquid crystal display further includes: a second insulating substrate opposing the first insulating substrate; and a liquid crystal layer between the first insulating substrate and the second insulating substrate, wherein the liquid crystal layer is in a vertical aligned (VA) mode.

According to the invention of the present invention,the second insulating substrate comprises a common electrode comprising a common electrode cutting pattern.

According to the invention of the present invention,the common electrode cutting pattern is in parallel with the pixel electrode cutting pattern.

The present invention also discloses a liquid crystal display including an insulation substrate, a plurality of gate lines formed on the insulation substrate, a data line crossing with the plurality of gate lines to form a pixel region, a pixel electrode that is divided into a main pixel electrode and a sub-pixel electrode by a pixel electrode cutting pattern and that is provided in the pixel region, and a connection thin film transistor including a control end connected to a previous gate line, an input end connected to the sub-pixel electrode, and an output end connected to the main pixel electrode.

According to the invention of the present invention, the liquid crystal display further includes a pixel thin film transistor comprising an output end connected to the main pixel electrode and overlapped with the sub-pixel electrode with a protective film interposed therebetween.

According to the invention of the present invention, a channel region of the connection thin film transistor is about 1/100 - 1/5 the width of a channel region of the pixel thin film transistor.

According to the invention of the present invention, the main pixel electrode and the output end contact each other via a contact hole formed in the protective film.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1A shows a layout of a liquid crystal display according to a first exemplary embodiment of the present invention.
FIG. 1B shows a common electrode cutting pattern according to the first exemplary embodiment of the present invention.
FIG. 2 is a cross-sectional view along line II - II of FIG. 1A.
FIG. 3A, FIG. 3B, FIG. 3C, FIG. 3D, and FIG. 3E are views for illustrating a method of manufacturing a liquid crystal display according to the first exemplary embodiment of the present invention.
FIG. 4 shows a layout of a liquid crystal display according to a second exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

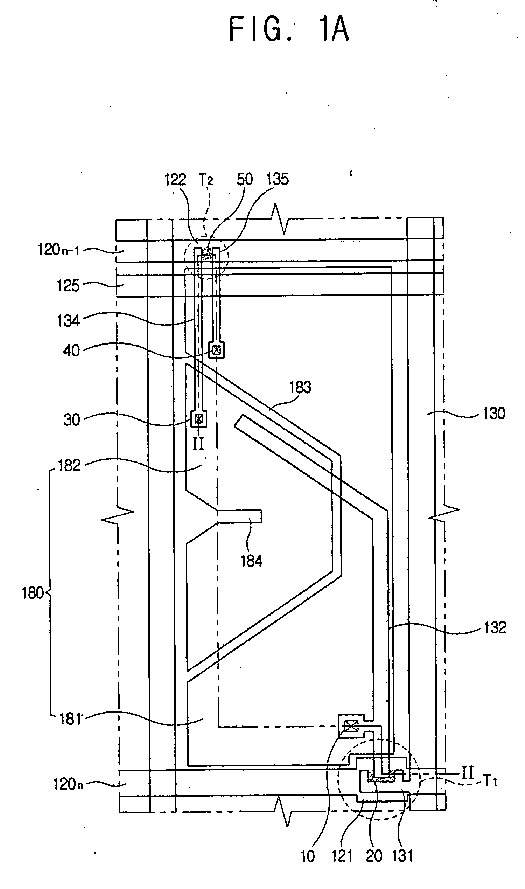

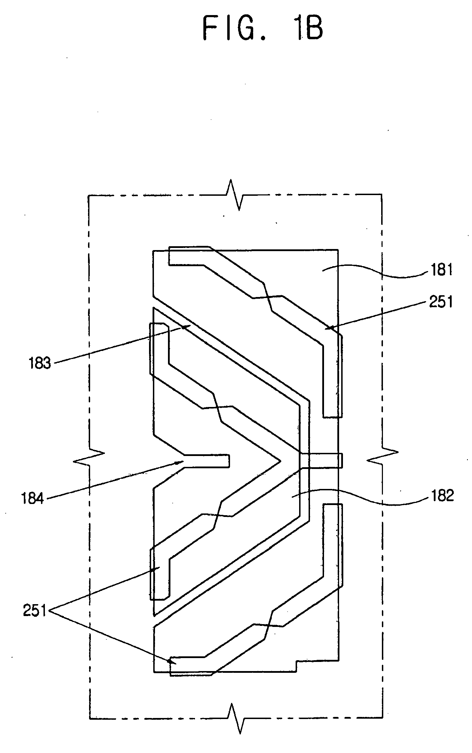

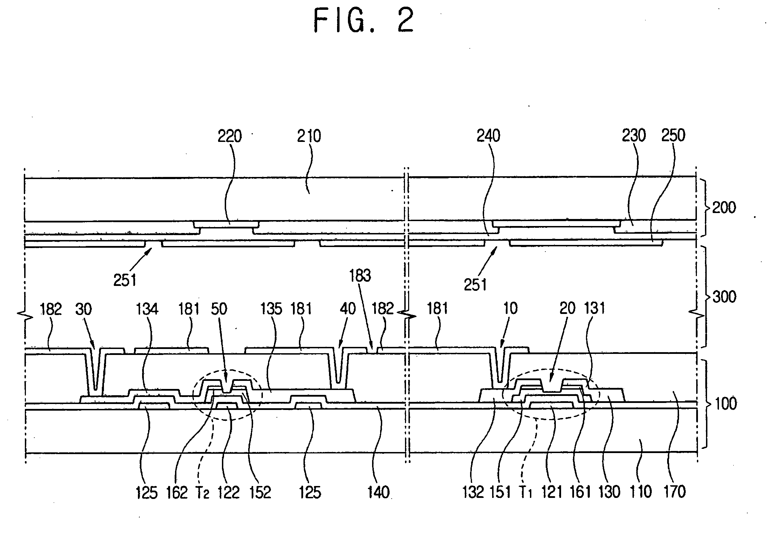

FIG. 1A shows a layout of a liquid crystal display according to a first exemplary embodiment of the present invention, and FIG. 1B shows a common electrode cutting pattern according to the first exemplary embodiment of the present invention. FIG. 2 is a cross-sectional view along line II - II of FIG. 1A.

A liquid crystal display (LCD) panel according to a first exemplary embodiment of the present invention includes a first substrate 100, a second substrate 200 opposing the first substrate 100, and a liquid crystal layer 300 positioned between the first substrate 100 and the second substrate 200.

The first substrate 100 according to the exemplary embodiment of the present invention includes a first thin film transistor T₁ and a second thin film transistor T₂ in a pixel region. The pixel region is formed by gate lines 120 (that is, 120ₙ and 120ₙ₋₁) and data lines 130 crossing the gate lines 120. The pixel region according to this exemplary embodiment has a rectangular shape. The first thin film transistor T₁ drives the pixel region, and the second thin film transistor T₂ connects a main pixel electrode 181 and a sub-pixel electrode 182 together.

Below, the first substrate 100 will be described.

Gate wiring elements 120, 121, 122, and 125 are formed on a first insulating substrate 110. The gate wiring elements 120, 121, 122, and 125 can be a single metal layer or multiple metal layers. The gate wiring elements 120, 121, 122, and 125 include a plurality of gate lines 120 (that is, 120ₙ and 120ₙ₋₁), a first gate electrode 121 and a second gate electrode 122 connected to the gate lines 120, and a storage electrode line 125, which is overlapped with the main pixel electrode 181 to form a storage capacity.

FIG. 1A shows an (n-1) th gate line 120ₙ₋₁ and an nth gate line 120ₙ. The first gate electrode 121 of the first thin film transistor T₁ protrudes from the nth gate line 120ₙ and may be a rectangular shape. The second gate electrode 122 of the second thin film transistor T₂ is connected to the (n-1)th gate line 120ₙ₋₁. Therefore, a gate-on voltage is applied to the second gate electrode 122 by the (n-1)th gate line 120ₙ₋₁. The first gate electrode 121 and second gate electrode 122 turn on the first thin film transistor T₁ and second thin film transistor T₂ to connect a source electrode and a drain electrode of the first thin film transistor T₄ and a source electrode and a drain electrode of the second thin film transistor T₂, respectively. Accordingly, the first gate electrode 121 and second gate electrode 122 may be called a control stage. The first gate electrode 121 according to this exemplary embodiment is larger than the second gate electrode 122. The size of the thin film transistor is not necessarily proportional to the size of the gate electrode. However, an area in which a channel region may be formed can be controlled according to the size of the gate electrode. Since the second thin film transistor T₂ is very small in comparison with the first thin film transistor T₁ in the liquid crystal display according to this exemplary embodiment, the second gate electrode 122 is small in comparison with the first gate electrode 121. The second gate electrode 122 does not protrude beyond the (n-1) th gate line 120ₙ₋₁ and may be prepared on the (n-1) th gate line 120ₙ₋₁.

The storage electrode line 125 according to this exemplary embodiment is formed parallel with the gate lines 120. The storage electrode line 125 may also be formed in parallel with the data lines 130, or portions of the storage electrode line 125 may be formed in parallel with both the gate lines 120 and the data lines 130.

A gate insulating layer 140 made of silicon nitride (SiNₓ) etc., covers the gate wiring elements 120, 121, 122, and 125 on the first insulating substrate 110.

Semiconductor layers 151 and 152 made of a semiconductor material including amorphous silicon etc., are formed on the gate insulating layer 140 of the first gate electrode 121 and second gate electrode 122, respectively. Resistance contact layers 161 and 162 made of material including n+ hydrogenated amorphous silicon highly doped with silicide or n-type impurities are formed on the semiconductor layers 151 and 152, respectively. The resistance contact layers 161, 162 are removed from respective channel regions 20, 50 between source electrodes 131 and 134 and drain electrodes 132 and 135. The channel region 50 of the second thin film transistor T₂ is about 1/100 - 1/5 the width of the channel region 20 of the first thin film transistor T₁. That is, when the second thin film transistor T₂ is turned on, the current is about 1/100 - 1/5 of a corresponding current flow when the first thin film transistor T₁ is turned on. Since the areas of the channel regions 20 and 50 are proportional to the capacity of the thin film transistor, the capacity of the second thin film transistor T₂ is less than that of the first thin film transistor T₁. That is, since it is preferable that the second thin film transistor T₂ connecting the main pixel electrode 181 and the sub-pixel electrode 182 has a capacity of discharging a remaining electric charge of the sub-pixel electrode 182 while having minimal or no effect on an existing transmittance ratio, the second thin film transistor T₂ is small compared to the first thin film transistor T₁. That is, it is preferable that the capacity of the second thin film transistor T₂ is about 1/100 - 1/5 the capacity of the first thin film transistor T₁. It is more preferable that the capacity of the second thin film transistor T₂ is about 1/30 - 1/10 the capacity of the first thin film transistor T₁.

Data wiring elements 130, 131, 132, 134, and 135 are formed on the resistance contact layer 161 and 162 and the gate insulating layer 140. Data wiring elements 130, 131, 132, 134, and 135 are also made of a single metal layer or multiple metal layers. The data wiring elements 130, 131, 132, 134, and 135 include the data lines 130, which are formed lengthwise and cross with the gate lines 120 forming a pixel region, the source electrodes 131 and 134, and the drain electrodes 132 and 135, which are spaced apart from the source electrodes 131 and 134 and are formed at the upper portions of the resistance contact layers 161 and 162 opposing the source electrodes 131 and 134.

A first source electrode 131 has a U-shape and extends to the top of the resistance contact layer 161. A first drain electrode 132 extends parallel along the data line 130 and is bent in a middle portion to overlap with the sub-pixel electrode 182. The first drain electrode 132 is connected to the main pixel electrode 181 via a contact hole 10 and is connected to the sub-pixel electrode 182 through an electrical capacity formed by an interposed protective film 170 without using a contact hole.

A second source electrode 134 extends to the sub-pixel electrode 182 from the (n-1) th gate line 120ₙ₋₁. A second drain electrode 135 extends to the main pixel electrode 181 in and parallel with the second source electrode 134.

The protective film 170 is formed on the data wiring elements 130, 131, 132, 134, and 135 and on the semiconductor layers 151 and 152, which are not covered with the data wiring elements 130, 131, 132, 134, and 135. Contact holes 10, 30, and 40 exposing the first drain electrode 132, the second source electrode 134, and the second drain electrode 135, respectively, are formed in the protective film 170.

A pixel electrode 180 is formed on the protective film 170. Generally, the pixel electrode 180 may be made of a transparent conducting material such as indium tin oxide (ITO) and indium zinc oxide (IZO). The pixel electrode 180 is divided into the main pixel electrode 181, which is electrically connected to the first drain electrode 132 via the contact hole 10, and the sub-pixel electrode 182, which is spaced apart from the main pixel electrode 181 and has at least one portion that overlaps with the first drain electrode 132. The sub-pixel electrode 182 is connected to the second source electrode 134 corresponding to the input end and the second drain electrode 135 corresponding to the output end via the contact holes 30 and 40, respectively.

If a differential voltage is not applied in one pixel region, but an identical voltage is applied therein, the transmittance ratio of the light according to the gray scale at the lateral surface differs from that of the front surface. Thus, visibility decreases. However, in the exemplary embodiment according to the present invention, the light from the backlight unit is projected through the main pixel electrode 181 or the sub-pixel electrode 182, the liquid crystal layer 300, and the second substrate 200. Here, a data signal is applied to the main pixel electrode 181 through the electrically connected first drain electrode 132. Meanwhile, a part of the first drain electrode 132 is positioned below the sub-pixel electrode 182 with the protective film 170 interposed therebetween. The sub-pixel electrode 182 does not receive a data signal directly from the first drain electrode 132 but receives a signal by a capacity formed in the protective film 170. Therefore, a weak signal is applied in the sub-pixel electrode 182 in comparison with the main pixel electrode 181 to maintain a lower transmittance ratio for the same data signal. As described above, the present invention provides a structure of having different voltages in a single pixel region. If a differential voltage is applied, the difference of a gamma curve between the side and front surfaces decreases to thereby improve visibility.

The main pixel electrode 181 and the sub-pixel electrode 182 are separated by a first pixel electrode cutting pattern 183. A second pixel electrode cutting pattern 184 is formed in the sub-pixel electrode 182. The first pixel electrode cutting pattern 183 includes a tilt portion inclined at an angle of about 45° or 135° with respect to the gate lines 120. The second pixel electrode cutting pattern 184 is formed in parallel with the gate lines 120. Pixel electrode cutting patterns 183 and 184 of the pixel electrode 180 divide the liquid crystal layer 300 into a plurality of domains together with a common electrode cutting pattern 251, which will be described later. Accordingly, multiple domains may be provided to thus improve the viewing angle.

As described above, the sub-pixel electrode 182 is separated from the main pixel electrode 181 by the first pixel electrode cutting pattern 183, and receives a voltage. Accordingly, visibility can be effectively improved. However, if a path does not exist for the electric charges to be discharged, the electric charges accumulate in the sub-pixel electrode 182, and thus a voltage shift may occur. Since the voltage shift changes the transmittance ratio according to the applied voltage, flicker and an afterimage due to flicker may result. Particularly, in the case that a white voltage is applied in the sub-pixel electrode 182, there is a problem that a brighter or darker color is implemented according to the gray scale. In this exemplary embodiment, before a gate-on voltage is applied to the nth gate line 120ₙ and turns on the first thin film transistor T₁, the second thin film transistor T₂ is turned on by a gate-on voltage applied to the (n-1) gate line 120ₙ₋₁. If the second thin film transistor T₂ is turned on, an electric charge in the sub-pixel electrode 182 through the second source electrode 134, that is, the DC component, exits from the sub-pixel electrode 182 and is delivered to the main pixel electrode 181 through the second drain electrode 135. If a gate-on voltage is applied in the nth gate line 120ₙ, the DC component can be discharged by the first thin film transistor T₁. That is, the electric charge remaining in the sub-pixel electrode 182 due to electric charging may be discharged into the main pixel electrode 181, whose capacity is bigger than the sub-pixel electrode 182, by using the second thin film transistor T₂. Accordingly, flicker and an afterimage can be prevented.

The second substrate 200 will now be described below.

A black matrix 220 is formed on a second insulating substrate 210. The black matrix 220 generally separates red, green, and blue filters, and plays a role of blocking direct optical irradiation toward the thin film transistor positioned in the first substrate 100. Generally, the black matrix 220 is made of a photosensitive organic material in which black pigment is added. Carbon black or titanium oxide may be used as the black pigment.

A color filter layer 230 is formed of red, green, and blue filters, which are repetitively formed with the black matrix 220 as a boundary. The color filter layer 230 plays a role of giving color to the light that is irradiated from a backlight unit (not shown) and passed through the liquid crystal layer 300. Generally, the color filter layer 230 is made of a photosensitive organic material.

An overcoat film 240 is formed on the color filter layer 230 and the black matrix 220 which is not covered with the color filter layer 230. The overcoat film 240 planarizes the color filter layer 230 and plays a role of protecting the color filter layer 230. Generally, an acryl group epoxy material is widely used as the overcoat film 240.

A common electrode 250 is formed on the overcoat film 240. The common electrode 250 may be made of a transparent conducting material such as indium tin oxide (ITO) or indium zinc oxide (IZO). The common electrode 250 applies a voltage directly to the liquid crystal layer 300 together with the pixel electrode 180 of the thin film transistor substrate. The common electrode cutting pattern 251 is formed in the common electrode 250. The common electrode cutting pattern 251 is parallel with the tilt portion of the first pixel electrode cutting pattern 183, that is, is inclined at about 45° or 135° with respect to the gate lines 120. The common electrode cutting pattern 251 plays a role of dividing the liquid crystal layer 300 into a plurality of domains together with the pixel electrode cutting patterns 183 and 184 of the pixel electrode portion 180.

The pixel electrode cutting patterns 183 and 184 and the common electrode cutting pattern 251 are not restricted to the present exemplary embodiment but may be formed in various forms.

The liquid crystal layer 300 is positioned between the first substrate 100 and the second substrate 200. The liquid crystal layer 300 is in a vertically aligned (VA) mode. The liquid crystal molecules are aligned in the longitudinal perpendicular direction when a voltage is not applied thereto. If a voltage is applied to the liquid crystal layer 300, the liquid crystal molecules lie in the vertical direction with respect to an electric field because the dielectric anisotropy of the liquid crystal molecules is negative in nature. However, if the respective patterns 183, 184, and 251 are not formed, an azimuth with which the liquid crystal molecules lie is not settled and thus the liquid crystal molecules are randomly aligned in various directions. A disclination line is formed at a boundary face where an orientation direction differs. The respective patterns 183, 184, and 251 make a fringe field when a voltage is applied to the liquid crystal layer 300 to determine the azimuth of the liquid crystal director orientation. Moreover, the liquid crystal layer 300 is divided into multiple domains according to the arrangement of the respective patterns 183, 184, and 251. Accordingly, the viewing angle is improved. Simultaneously, visibility is improved and a light leakage is minimized. As a result, an LCD panel with a better contrast ratio can be provided.

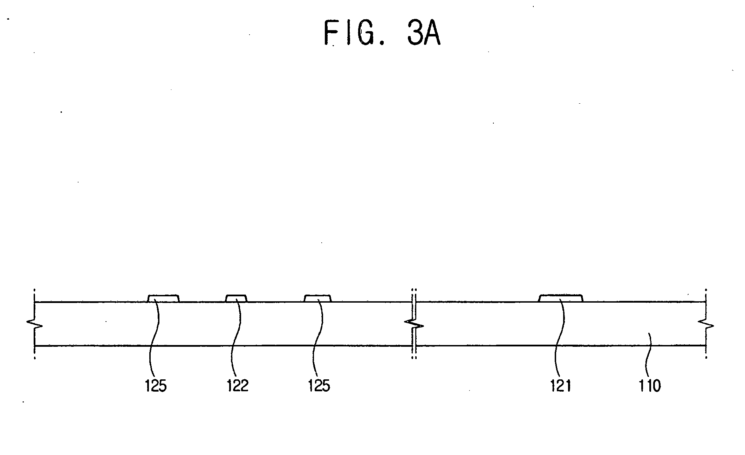

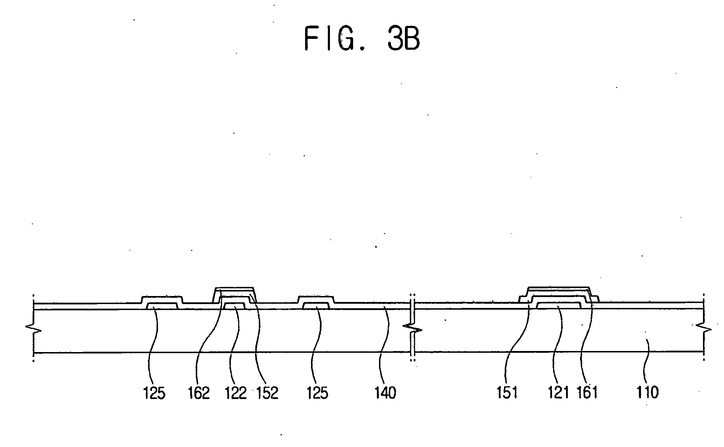

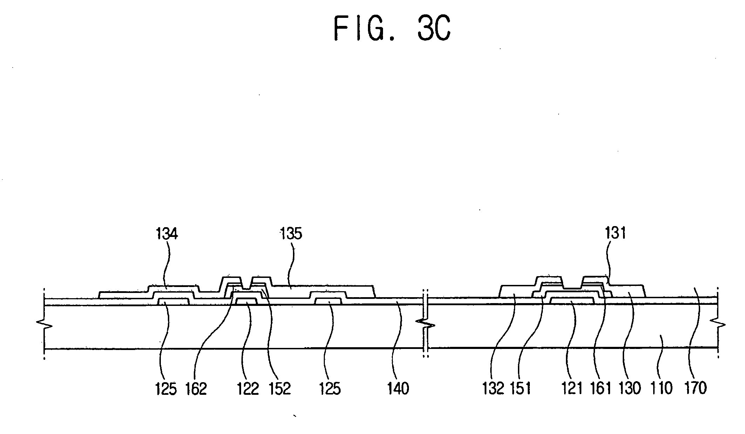

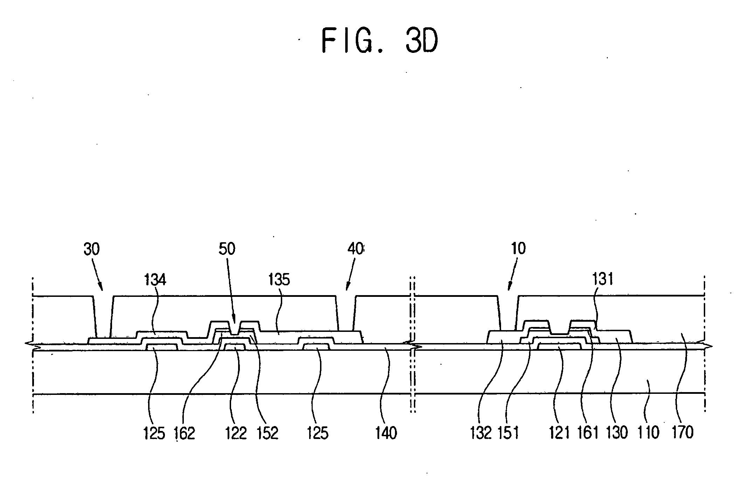

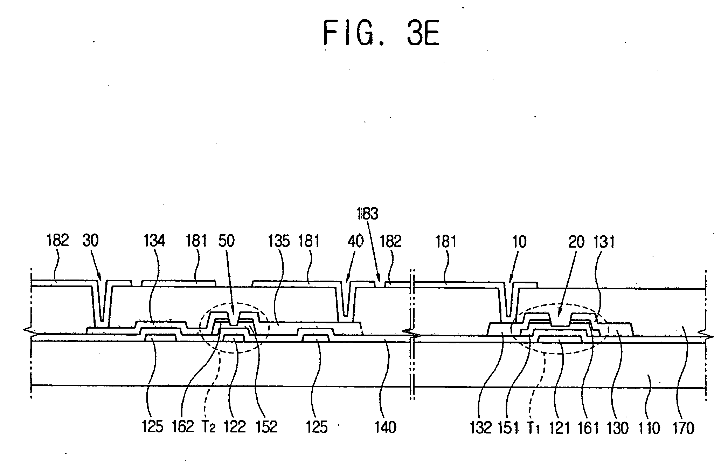

FIG. 3A, FIG.3B, FIG. 3C, FIG. 3D, and FIG. 3E illustrate a method of manufacturing a liquid crystal display according to the first exemplary embodiment of the present invention.

First, as shown in FIG. 3A, a gate wiring material is deposited on the first insulating substrate 110 and then patterned in a photolithographic etching process using a mask, to thereby form the gate lines 121, 122, and 125, which include the gate lines (not shown), the first gate electrode 121, the second gate electrode 122, and the storage electrode line 125.

Then, a tri-layer film for forming the gate insulating layer 140, the semiconductor layers 151 and 152, and the resistance contact layers 161 and 162 is successively deposited. Thereafter, as shown in FIG. 3B, the semiconductor layer and the resistance contact layer are photolithographically etched to thereby form the semiconductor layers 151 and 152 and the resistance contact layers 161 and 162 of an island shape on the gate insulating layer 140 above the first gate electrode 121 and the second gate electrode 122.

Then, as shown in FIG. 3C, a data wiring material is deposited and then patterned in a photolithographic etching processing using a mask to thus form the data wiring elements 130, 131, 132, 134, and 135 including the data lines 130, which cross with the gate lines 120, the source electrodes 131 and 134, which extend to the top of the first gate electrode 121 and the second gate electrode 122, and the drain electrodes 132 and 135, which are opposed to the source electrodes 131 and 134.

Subsequently, resistance contact layers 161 and 162, which are not covered with the data wiring elements 130, 131, 132, 134, and 135, are etched around the first gate electrode 121 and the second gate electrode 122. Portions of the semiconductor layers 151 and 152 that correspond to the first gate electrode 121 and the second gate electrode 122 are not covered by the resistance contact layers 161 and 162. Here, the first drain electrode 132 is formed to extend to the main pixel electrode 181 and the sub-pixel electrode 182, which are subsequently formed.

Then, the protective film 170 is formed as shown in FIG. 3D. The protective film 170 is formed by a plasma-enhanced chemical vapor deposition (PECVD) method using a silicon source gas and a nitrogen source gas. Contact holes 10, 40, and 30 exposing the drain electrodes 132 and 135 and the second source electrode 134, respectively are formed in the protective film 170.

As shown in FIG. 3E, once the pixel electrode is divided into the main pixel electrode 181 and the sub-pixel electrode 182 by the pixel electrode cutting pattern 183, the first substrate 100 is completed.

The second substrate 200 can be manufactured by a known method. The common electrode cutting pattern 251 is formed when forming the common electrode 250. Thereafter, the first substrate 100 and the second substrate 200 are aligned facing each other, and the liquid crystal layer 300 is injected between the first substrate 100 and the second substrate 200, thereby completing the LCD panel.

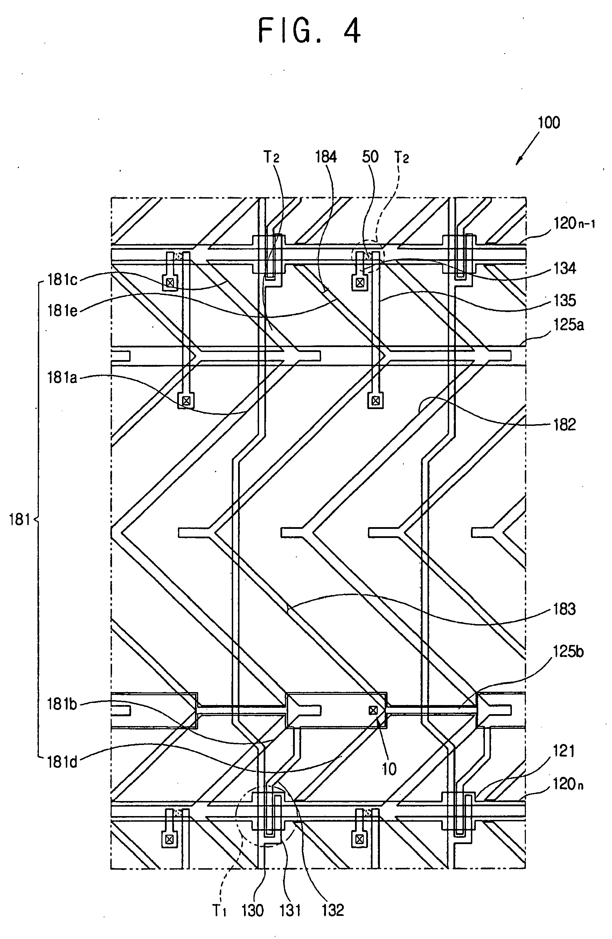

FIG. 4 shows a layout of a liquid crystal display according to a second exemplary embodiment of the present invention.

A pixel electrode 180 includes a sub-pixel electrode 182, which is provided in a substantially zigzag form, and a main pixel electrode 181, which is separated from the sub-pixel electrode 182 and covers a part of the periphery of the sub-pixel electrode 182. That is, a pixel region according to the second exemplary embodiment is not of a rectangular shape of the first exemplary embodiment but of a Z-shape approximately.

The sub-pixel electrode 182 is of a clamp shape or a rotated V-shape in which one end is adjacent to a first storage electrode line 125a and the other end is adjacent to a second storage electrode line 125b.

The main pixel electrode 181 includes a first portion 181a positioned at one side of the sub-pixel electrode 182 in the same shape as that of the sub-pixel electrode 182, a second portion 181b and a third portion 181c, which are bent from either end of the first portion 181a, and a fourth portion 181d and a fifth portion 181e, which are bent from either end of the sub-pixel electrode 182 and arranged in parallel with the second portion 181b and the third portion 181c.

The first through fifth portions 181a, 181b, 181c, 181d, and 181e are integrally formed but partitioned by a second pixel electrode cutting pattern 184. The second pixel electrode cutting pattern 184 is formed between the first portion 181a and the second portion 181b, between the second portion 181b and the fourth portion 181d, and between the second portion 181b and the fifth portion 181e. The first pixel electrode cutting pattern 183 is formed between the first portion 181a and the sub-pixel electrode 182, between the sub-pixel electrode 182 and the fourth portion 181d, and between the sub-pixel electrode 182 and the fifth portion 181e. The first and second pixel electrode cutting patterns 183 and 184 are formed in order to divide the liquid crystal layer 300 into a plurality of domains together with the common electrode cutting pattern (not shown).

In the second exemplary embodiment, the main pixel electrode 181 and the sub-pixel electrode 182 are also connected through the second thin film transistor T₂. The second source electrode 134 is connected to the fifth portion 181e of the main pixel electrode 181. The second drain electrode 135 is connected to the sub-pixel electrode 182 across the fifth portion 181e. The remnant charge of the sub-pixel electrode 182 is discharged into the main pixel electrode 181 by the (n-1) th gate line 120ₙ₋₁ before a gate-on voltage is applied to the nth gate line 120ₙ. The voltage shift can be prevented by discharging the accumulated electric charges, and thus flicker and afterimage problems may be improved.

As described above, the present invention provides a liquid crystal display in which an afterimage by flicker may be prevented.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A liquid crystal display, comprising:
a first insulation substrate (110);
a plurality of gate lines (120) formed on the first insulation substrate (110);
a data line (130) crossing with the plurality of gate lines (120) to form a pixel region;
a pixel electrode (180) that is divided into a main pixel electrode (181) and a sub-pixel electrode (182) by a pixel electrode cutting pattern (183; 184) and that is provided in the pixel region; and
a first thin film transistor (T1) comprising a drain electrode (132) connected to the main pixel electrode (181);
**characterized in that**
the liquid crystal display further comprises:
at least one portion of the sub-pixel electrode (182) overlapping the drain electrode (132);
a protective film (170) interposed between the drain electrode (132) and the sub-pixel electrode (182); and
a second thin film transistor (T2) comprising a control end (122) connected to a previous gate line (120), an input end (134) connected to the sub-pixel electrode (182), and an output end (135) connected to the main pixel electrode (181).

2. The liquid crystal display of claim 1, wherein a capacity of the second thin film transistor (T2) is about 1/100 - 1/5 of a capacity of the first thin film transistor (T1).

3. The liquid crystal display of claim 1, wherein the main pixel electrode (181) and the drain electrode (132) contact each other via a contact hole (10) formed in the protective film (170).

4. The liquid crystal display of claim 1, wherein the input end (134) contacts the sub-pixel electrode (182) and the output end (135) contacts the main pixel electrode (181), respectively.

5. The liquid crystal display of claim 4, wherein the pixel electrode cutting pattern (183; 184) includes a tilt pattern inclined at an angle of 45° or 135° with respect to the gate line (120).

6. The liquid crystal display of claim 5, wherein the sub-pixel electrode (182) comprises a clamp shape at a boundary according to an extension direction of the gate line (120), and the main pixel electrode (181) surrounds a part of the periphery of the sub-pixel electrode (182).

7. The liquid crystal display of claim 6, wherein the main pixel electrode (181) comprises a first portion (181 a) positioned at one side of the sub-pixel electrode (182) in the same shape as that of the sub-pixel electrode (182), a second portion (181 b) and a third portion (181c) that are bent from either end of the main pixel electrode (181), and a fourth portion (181d) and a fifth portion (181 e) that are bent from either end of the sub-pixel electrode (182) and are arranged in parallel with the second portion (181b) and the third portion (181c).

8. The liquid crystal display of claim 1, further comprising a storage electrode (125) formed in the pixel region.

9. The liquid crystal display of claim 8, wherein the storage electrode (125) is arranged in parallel with at least one of the gate line (120) and the data line (130).

10. The liquid crystal display of claim 5, further comprising:
a second insulating substrate (210) opposing the first insulating substrate (110); and
a liquid crystal layer (300) between the first insulating substrate (110) and the second insulating substrate (210),
wherein the liquid crystal layer (300) is in a vertical aligned (VA) mode.

11. The liquid crystal display of claim 10, wherein the second insulating substrate (210) comprises a common electrode (250) comprising a common electrode cutting pattern (251).

12. The liquid crystal display of claim 11, wherein the common electrode cutting pattern (251) is in parallel with the pixel electrode cutting pattern (183; 184).

## Patentansprüche

1. Flüssigkristall-Display, umfassend:
ein erstes Isoliersubstrat (110);
eine Mehrzahl von Gate-Leitungen (120), die auf dem ersten Isoliersubstrat (110) ausgebildet sind;
eine Datenleitung (130), welche sich mit der Mehrzahl von Gate-Leitungen (120) kreuzt, um einen Pixelbereich zu bilden;
eine Pixelelektrode (180), die mittels eines Pixelelektroden-Schnittmusters (183; 184) in eine Hauptpixelelektrode (181) und eine Sub-Pixelelektrode (182) unterteilt und die im Pixelbereich vorgesehen ist; und
einen ersten Dünnschichttransistor (T1), der eine Drain-Elektrode (132) umfasst, die mit der Hauptpixelelektrode (181) verbunden ist;
**dadurch gekennzeichnet, dass**
das Flüssigkristall-Display ferner umfasst:
mindestens einen Teil der Sub-Pixelelektrode (182), welcher die Drain-Elektrode (132) überlappt;
einen Schutzfilm (170), der zwischen der Drain-Elektrode (132) und der Sub-Pixelelektrode (182) eingeschoben ist; und
einen zweiten Dünnschichttransistor (T2), der eine Steuerungsseite (122), die mit einer vorherigen Gate-Leitung (120) verbunden ist, eine Eingangsseite (134), die mit der Sub-Pixelelektrode (182) verbunden ist, und eine Ausgangsseite (135), die mit der Hauptpixelelektrode (181) verbunden ist, umfasst.

2. Flüssigkristall-Display gemäß Anspruch 1, wobei eine Kapazität des zweiten Dünnschichttransistors (T2) etwa 1/100 - 1/5 einer Kapazität des ersten Dünnschichttransistors (T1) beträgt.

3. Flüssigkristall-Display gemäß Anspruch 1, wobei die Hauptpixelelektrode (181) und die Drain-Elektrode (132) einander über ein im Schutzfilm (170) gebildetes Kontaktloch (10) kontaktieren.

4. Flüssigkristall-Display gemäß Anspruch 1, wobei die Eingangsseite (134) die Sub-Pixelelektrode (182) kontaktiert und die Ausgangsseite (135) die Hauptpixelelektrode (181) kontaktiert.

5. Flüssigkristall-Display gemäß Anspruch 4, wobei das Pixelelektroden-Schnittmuster (183; 184) ein geneigtes Muster umfasst, das im Verhältnis zur Gate-Leitung (120) in einem Winkel von 45° oder 135° geneigt ist.

6. Flüssigkristall-Display gemäß Anspruch 5, wobei die Sub-Pixelelektrode (182) eine Klammerform an einer Grenze gemäß einer Erstreckungsrichtung der Gate-Leitung (120) umfasst und die Hauptpixelelektrode (181) einen Teil des Außenumfangs der Sub-Pixelelektrode (182) umschließt.

7. Flüssigkristall-Display gemäß Anspruch 6, wobei die Haupt-Pixelelektrode (181) einen ersten Teil (181a) umfasst, der an einer Seite der Sub-Pixelelektrode (182) in derselben Form wie jene der Sub-Pixelelektrode (182) positioniert ist, ferner einen zweiten Teil (181b) und einen dritten Teil (181c), die von beiden Enden der Hauptpixelelektrode (181) gebogen sind, und einen vierten Teil (181d) und einen fünften Teil (181e), die von beiden Enden der Sub-Pixelelektrode (182) gebogen und parallel zum zweiten Teil (181b) und zum dritten Teil (181c) angeordnet sind.

8. Flüssigkristall-Display gemäß Anspruch 1, das ferner eine im Pixelbereich gebildete Speicherelektrode (125) umfasst.

9. Flüssigkristall-Display gemäß Anspruch 8, wobei die Speicherelektrode (125) parallel zu mindestens einer von Gate-Leitung (120) und Datenleitung (130) angeordnet ist.

10. Flüssigkristall-Display gemäß Anspruch 5, das ferner umfasst:
ein zweites Isoliersubstrat (210) gegenüber dem ersten Isoliersubstrat (110); und
eine Flüssigkristallschicht (300) zwischen dem ersten Isoliersubstrat (110) und dem zweiten Isoliersubstrat (210),
wobei die Flüssigkristallschicht (300) in einem vertikal ausgerichteten (VA) Modus gegeben ist.

11. Flüssigkristall-Display gemäß Anspruch 10, wobei das zweite Isoliersubstrat (210) eine gemeinsame Elektrode (250) umfasst, die ein gemeinsames Elektrodenschnittmuster (251) umfasst.

12. Flüssigkristall-Display gemäß Anspruch 11, wobei das gemeinsame Elektrodenschnittmuster (251) parallel zum Pixelelektroden-Schnittmuster (183; 184) ist.

## Revendications

1. Affichage à cristaux liquides comprenant :
un premier substrat d'isolation (110) ;
une pluralité de lignes de grille (120) formées sur le premier substrat d'isolation (110) ;
une ligne de données (130) croisant la pluralité de lignes de grille (120) pour former une région de pixel ;
une électrode de pixel (180) divisée en une électrode de pixel principale (181) et une sous-électrode de pixel (182) par un motif de découpage de l'électrode de pixel (183 ; 184) et qui est prévue dans la région de pixel ;
et
un premier transistor à couche mince (T1) comprenant une électrode de drain (132) connectée à l'électrode de pixel principale (181) ;
**caractérisé en ce que** l'affichage à cristaux liquides comprend en outre :
au moins une partie de la sous-électrode de pixel (182) recouvrant l'électrode de drain (132) ;
un film protecteur (170) interposé entre l'électrode de drain (132) et la sous-électrode de pixel (182) ; et
un second transistor à couche mince (T2) comprenant une extrémité de contrôle (122) connectée à une ligne de grille (120) précédente, une extrémité d'entrée (134) connectée à la sous-électrode de pixel (182) et une extrémité de sortie (135) connectée à l'électrode de pixel principale (181).

2. Affichage à cristaux liquides selon la revendication 1, dans lequel la capacité du deuxième transistor à couche mince (T2) est d'environ 1/100^{e} à 1/5^{e} de la capacité du premier transistor à couche mince (T1).

3. Affichage à cristaux liquides selon la revendication 1, dans lequel l'électrode de pixel principale (181) et l'électrode de drain (132) sont en contact l'une avec l'autre via un trou de contact (10) formé dans le film protecteur (170).

4. Affichage à cristaux liquides selon la revendication 1, dans lequel l'extrémité d'entrée (134) vient en contact avec la sous-électrode de pixel (182) et l'extrémité de sortie (135) vient en contact avec l'électrode de pixel principale (181), respectivement.

5. Affichage à cristaux liquides selon la revendication 4, dans lequel le schéma de découpage de l'électrode de pixel (183 ; 184) comprend un schéma d'inclinaison incliné selon un angle de 45° ou 135° par rapport à la ligne de grille (120).

6. Affichage à cristaux liquides selon la revendication 5, dans lequel la sous-électrode de pixel (182) comprend une forme de pince à une limite suivant une direction d'extension de la ligne de grille (120), et l'électrode de pixel principale (181) entoure une partie de la périphérie de la sous-électrode de pixel (182).

7. Affichage à cristaux liquides selon la revendication 6, dans lequel l'électrode de pixel principale (181) comprend une première partie (181a) positionnée sur un côté de la sous-électrode de pixel (182) et de la même forme que la sous-électrode de pixel (182), une deuxième partie (181b) et une troisième partie (181c) qui sont pliées à partir de l'une ou l'autre extrémité de l'électrode de pixel principale (181) et une quatrième partie (181d) et une cinquième partie (181e) qui sont pliées à partir de l'une ou l'autre extrémité de la sous-électrode de pixel (182) et sont disposées en parallèle avec la deuxième partie (181b) et la troisième partie (181c).

8. Affichage à cristaux liquides selon la revendication 1, comprenant en outre une électrode d'accumulation (125) formée dans la région de pixel.

9. Affichage à cristaux liquides selon la revendication 8, dans lequel l'électrode d'accumulation (125) est disposée en parallèle avec au moins soit la ligne de grille (120), soit la ligne de données (130).

10. Affichage à cristaux liquides selon la revendication 5, comprenant en outre :
un second substrat isolant (210) à l'opposé du premier substrat isolant (110) ; et
une couche de cristaux liquides (300) entre le premier substrat isolant (110) et le second substrat isolant (210),
dans lequel la couche de cristaux liquides (300) est en mode d'alignement vertical (AV).

11. Affichage à cristaux liquides selon la revendication 10, dans lequel le second substrat isolant (210) comprend une électrode commune (250) qui comporte un motif de découpage de l'électrode commune (251).

12. Affichage à cristaux liquides selon la revendication 11, dans lequel le schéma de découpage de l'électrode commune (251) est parallèle au schéma de découpage de l'électrode de pixel (183 ; 184).
